# EUROPEAN PATENT SPECIFICATION

(11) **EP 3 880 411 B1**
(45) Date of publication and mention of the grant of the patent: **01.01.2025**
(21) Application number: 18811723.8
(22) Date of filing: 13.11.2018
(51) Int. Cl.: B25J 9/16, G05B 13/02

(54) **A METHOD AND A SYSTEM FOR APPLYING MACHINE LEARNING TO AN APPLICATION**
VERFAHREN UND SYSTEM ZUM ANWENDEN VON MASCHINENLERNEN AUF EINE ANWENDUNG
PROCÉDÉ ET SYSTÈME D'APPLICATION DE L'APPRENTISSAGE AUTOMATIQUE À UNE APPLICATION

(43) Date of publication of application: 22.09.2021
(73) Proprietor: ABB Schweiz AG, 5400 Baden (CH)
(72) Inventor: CLEVER, Debora, 64673 Zwingenberg (DE); DAI, Fan, 64673 Zwingenberg (DE); DIX, Marcel, 78476 Allensbach (DE); KLÖPPER, Benjamin, 68199 Mannheim (DE); KOTRIWALA, Arzam Muzaffar, 68526 Ladenburg (DE); RODRIGUEZ, Pablo, 69488 Birkenau (DE)
(74) Representative: Maiwald GmbH
(86) International application number: PCT/EP2018/081048
(87) International publication number: WO 2020/098918

(56) References cited:
- US-A1- 2017 285 584
- US-B1- 10 058 995
- US-B1- 9 811 074
- KUAN FANG ET AL: "Multi-task Domain Adaptation for Deep Learning of Instance Grasping from Simulation", ARXIV.ORG, CORNELL UNIVERSITY LIBRARY, 201 OLIN LIBRARY CORNELL UNIVERSITY ITHACA, NY 14853, 17 October 2017 (2017-10-17), XP080829534

## Description

The present disclosure relates to a method for applying machine learning to an application, a system for applying machine learning to an application, a set of parameters and a program element.

Tuning of parameters of an application program, particularly an industrial application program like a robot application program, is a tedious and time-consuming task and is often done during the commissioning and often delaying the start of production.

Machine learning can offer improvements. However, machine learning requires a relatively big amount of data, especially since some part of the data is only used for training and the other part is used for learning. In industrial applications, it is very difficult to obtain sufficient amount of data for machine learning. Learning methods need to be able to cope with this requisite.

A common approach is the so-called explorative learning. In this learning method, a learning searches new possibilities and alternatives to adapt to environmental change through continuous experimental activities. However, explorative learning is relatively expensive, dangerous and very often not even possible on the real hardware.

For example, machine learning for robot applications usually uses machine learning to start learning basic movements of the robot. Thereby, the machine learning algorithms in particular modify the program executed in the robot application in order to improve the task to be solved.

Instead of applying machine learning on a real industrial application, simulations can be used instead, in order to perform machine learning. Generally, transferring the results of simulation based machine learning, so called offline machine learning, to the real application is quite hard. Often, the simulation does not fit sufficiently to reality. The level of learning, e.g. controller, motion, task, has to be well chosen to prevent that the reality gap, which is the gap between the simulation application and the real application, has severe consequences. Additionally, in most cases the time required for the learning process is often too long for practical applications. Additionally, the definition of an optimization process for the parameters with complete definition of constraints is very difficult.

US 2017/285584 A1 describes a machine learning device.

US 9 811 074 B1 describes an optimization of robot control programs in physics-based simulated environment.

US 10 058 995 B1 describes a method for operating multiple testing robots.

Therefore, there is a need for an improved method for applying machine learning to an application.

According to an aspect of the present disclosure, a method for applying machine learning, particularly parameter based machine learning, to an application is provided comprising the steps:
a) Generating a set of candidate parameters by a learner;
b) Executing a program in at least one simulated application and in at least one real application executed on a machine based on the set of candidate parameters and providing interim results of tested sets of candidate parameters based on measured performance information of the execution of the program;
c) Collecting a predetermined number of interim results and providing an end result based on a combination of the candidate parameters and the measured performances information by a trainer;
d) Generating a new set of candidate parameters by the learner based on the end result, for being executed by the unchanged program; and
e) modifying the simulated application based on a reality data of the machine, wherein the reality data is acquired while executing the program in the real application, wherein the reality data is acquired using measurements from the real world and further estimations, wherein the measurements comprise physics parameters.

The simulated application preferably is a simulation of a real application. Further preferably, the simulated application is a simulation of a real industrial application, in particular a real robot application, executed on a machine, in particular a robot.

The described method for applying machine learning can also be described as "black-box" learning. Generally, only parameters and their values of the application, in particular the application program, are identified and improved by machines learning. The actual application program remains unchanged during the method. In other words, black box refers to the fact, that no component of the learning framework utilizes information about the state and condition of the application or, in case of a real application, of the machine.

The simulated application preferably is executed on a simulation model. The simulated application preferably further comprises an application program and an application control.

For example, when the real application is a real robot application, the simulated application preferably comprises a robot application program and a robot control, including the interaction between a robot and robot environment objects.

Complementing the machine learning based on the real application by using simulated applications, in particular a set of distributed simulations, an increased amount of learning data necessary for proper machines learning can be obtained. Thus, the speed of the learning process can be increased.

The learner preferably is configured to generate an initial set of candidate parameters in addition to generate new sets of candidate parameters based on the performance information of the application. The learner preferably comprises a machine learning back-end. In an advantageous embodiment, the learner uses suitable learning algorithms for generating the candidate parameters. Preferably, the learning algorithm is any kind of meta-heuristic for optimization like genetic algorithms, tabu-search or simulated annealing.

The performance information preferably comprises different elements, for example failure, success, success probability, cycle times, etc.

The feasibility of a set of candidate parameters is not required to be defined upfront. Preferably, errors in the execution caused by an infeasible set of candidate parameters will be marked by the performance information. In case a program in a simulated application was based on an infeasible set of candidate parameters, the simulation is reset and the learning process continues with the next set of candidate parameters.

Preferably, the set of candidate parameters comprises parameters for functions of the program relating to movements and/or tasks of the machine executing the program, like for example relating to a robot picking up an object, a search radius for the object and/or a search pattern and/or an increment describing the granularity of the search.

Preferably, the program executed in one or a plurality of simulated applications is always the same.

Preferably, reality data is acquired using measurements from the real world and further estimations, in particular physics parameters like weights, friction, coefficients, etc. Based on the reality information, the simulated application can be modified, in order to decrease the reality gap, describing the difference between results of the simulated application compared to results of the real application, when the corresponding program is executed with the same candidate parameters.

The end result preferably is a set of parameters for the real application that is characterized by the most improvement of its performance regarding predetermined criteria. For example, predetermined criteria in a real robot application for searching and picking up an object would include a search time and a probability of success.

In a preferred embodiment, the program is executed in at least one simulated application and in at least one real application, particularly a real robot application, preferably executed on a machine, in particular on a robot. Preferably, the program is executed simultaneously in one or a plurality of simulated applications and in at least one real application.

The real application is preferably executed on a machine, further preferably the real robot application is executed on a robot.

The real robot application preferably comprises a robot application with mechanical manipulator, robot control and robot application program as well as non-robot elements, like a programmable logic controller (PLC), material transportation, machining centers or the like.

Simultaneously executing a program in the simulated application and the real application decreases the so called reality gap. The simulated application almost never is an exact image of the real application. Therefore, the end results of the simulated application generally differ from end results of the real application, when the corresponding program is executed with the same set of candidate parameters. When applying machine learning only to simulated applications, there is an increased possibility that the machine learning algorithm develops in a direction, which improves the end results of the simulated application, but does not improve the end results of the real application in the same way. In this meaning, there is a gap between the simulation and reality, called reality gap. This phenomenon can lead to an end result, proposed through machine learning based on simulated applications only that in fact seems to be the best end result, however does not have to be the best end result in view of the real application.

Simultaneously, in this case has to be understood as simultaneously in view of the execution of one or more whole sets of candidate parameters. For example, it is not necessary that a program in the simulated application is executed at the exact same time as a program is executed in the robot application.

Therefore, during the runtime of the whole learning method, there can be times, when the program is executed in the simulated application only or in the real application only. Preferably, when explorative learning is applied to the simulated application, the program is only executed in the simulated application. When explorative learning is finished, the program is also executed in the real application again. Further preferably, the program is executed in the simulated application and in the real application in parallel complementary and/or redundantly.

The same program is preferably executed in one or a plurality of simulated applications and the real application.

Preferably, the real application is additionally executed based on the set of candidate parameters and starts an additional machine learning process, further preferably with on-board algorithms, separated from the described method and thereby without a system applying the described method.

In a preferred embodiment, the program is executed in cooperating real applications, preferably cooperating machines, wherein the set of candidate parameters defines task assignments to each of the cooperating real applications.

A special case of learning is learning the task assignment to several machines, in particular robots, in a cell. The set of candidate parameters defines which sub-task an individual machine performs, for example, when relating to several robot arms, which parts it assembles according to the candidate parameter "object type" or "picking position".

In a preferred embodiment, steps a) to d) are repeated, without changing the program, until a stop criterion is met, wherein preferably the stop criterion comprises an amount of executions of the program and/or a target measured performance information.

In a preferred embodiment, the set of candidate parameters has a parameter range, wherein the set of candidate parameters executed on the simulated application has a wider parameter range than the set of candidate parameters executed on the real application.

A wider parameter range of candidate parameters increases the risk of unsafe parametrization. For example, an unsafe parametrization could lead to damage to the real application, when the program run with the unsafe parameters instructs the real application to damage itself or the environment. In case of a robot application, the robot may collide with surrounding objects, when it is run with unsafe parameters. Therefore, those scenarios are preferably tested in the simulated application. Based on a set of candidate parameters with wide parameter range, a subset of candidate parameters with a more narrow range can be determined, wherein in the simulated application, the subset of candidate parameters with a more narrow range, is already determined to be safe. Preferably, the information, if a certain range of candidate parameters is determined as safe, is based on the measured performance information.

In a preferred embodiment, the set of candidate parameters is assigned to the simulated application and/or the real application by at least one manager. Preferably the interim results of tested sets of candidate parameters are received based on a measured performance of the execution of the program by the manager.

The manager preferably triggers the execution of the application program. Further preferably, the manager collects or receives the performance information of the application and preferably provides the performance information to a trainer.

In an advantageous embodiment an individual manager is associated to each application, simulated application or real application.

In a preferred embodiment, the interim results are received by a trainer, wherein the trainer triggers the generation of new candidate parameters by the learner.

The trainer preferably requests and receives the initial set of candidate parameters and/or the new set of candidate parameters from the learner. Furthermore, the trainer preferably assigns the set of parameter to the manager. If there are several managers, the trainer assigns the set of parameters to individual managers. Additionally, the trainer preferably receives the performance information from the manger or managers and triggers the generation of new sets of candidate parameters by the learner. The trainer preferably receives the new set of candidate parameters from the learner.

According to an aspect of the present disclosure, a system for applying machine learning, in particular parameter based machine learning, to an application is provided, comprising a learner, configured to generate a set of candidate parameters, at least one simulated application, a program, configured to be executed in the simulated application and in at least one real application based on the set of candidate parameters, a sensor, configured to acquire reality data while the program is executed in a real application, wherein the reality data is acquired using measurements from the real world and further estimations, wherein the measurements comprise physics parameters, wherein the program is configured to provide interim results of tested sets of candidate parameters based on a measured performance of the execution of the program, a trainer, configured to collect a predetermined number of interim results, wherein the trainer is configured to provide an end result based on a combination of candidate parameters and measured performances. The learner is configured to generate a new set of candidate parameters based on the end result, for being executed by the unchanged program. The simulated application is configured to be modified based on the reality data.

In a preferred embodiment, the system comprises at least one real application, wherein the program is configured to be executed in the simulated application and in the real application based on the set of candidate parameters. Preferably the program is configured to be executed simultaneously in a plurality of simulated applications and in at least one real application.

In a preferred embodiment, the set of candidate parameters has a parameter range, wherein the set of candidate parameters executed on the simulated application has a wider parameter range than the set of candidate parameters executed on the real application.

In a preferred embodiment, the system comprises a manager, configured to assign the set of candidate parameters to the simulated application and/or the real application. Preferably, the manager is configured to receive the interim results of tested sets of candidate parameters based on a measured performance of the execution of the program. Further preferably, the learner is configured to receive the interim results by a trainer and the trainer is configured to trigger the generation of new candidate parameters by the learner.

Preferably, one or more of the real application, the simulated application, the learner, the manager and the trainer, are combined in a single software or hardware component. In particular, the learner and the manager, in particular the plurality of managers, are combined in a single software or hardware component.

According to an aspect of the present disclosure a set of parameters obtained by the described method is provided.

According to an aspect of the present disclosure a program element is provided that, when it is executed on a system for applying machine learning, in particular parameter based machine learning, to an application, instructs the system to execute the following steps:
a) Generating a set of candidate parameters by a learner;
b) Executing a program in at least one simulated application and in at least one real application based on the set of candidate parameters and providing interim results of tested sets of candidate parameters based on a measured performance of the execution of the program;
c) Collecting a predetermined number of interim results and providing an end result based on a combination of candidate parameters and measured performances by a trainer; and
d) Generating a new set of candidate parameters by the learner based on the end result, for being executed by the unchanged program
e) modifying the simulated application based on a reality data of the machine, wherein the reality data is acquired while executing the program in the real application, wherein the reality data is acquired using measurements from the real world and further estimations, wherein the measurements comprise physics parameters.

According to an aspect of the present disclosure a computer-readable medium is provided, on which a described program element is stored.

These and other features, aspects and advantages of the present invention will become better understood with reference to the accompanying figure and the following description.
Fig. 1 shows a system for applying machine learning to an application.
Fig. 2 shows a real robot application.
Fig. 3 shows a magnified view of the search pattern of Fig. 2.
Fig. 4 shows a method for applying machine learning to an application.

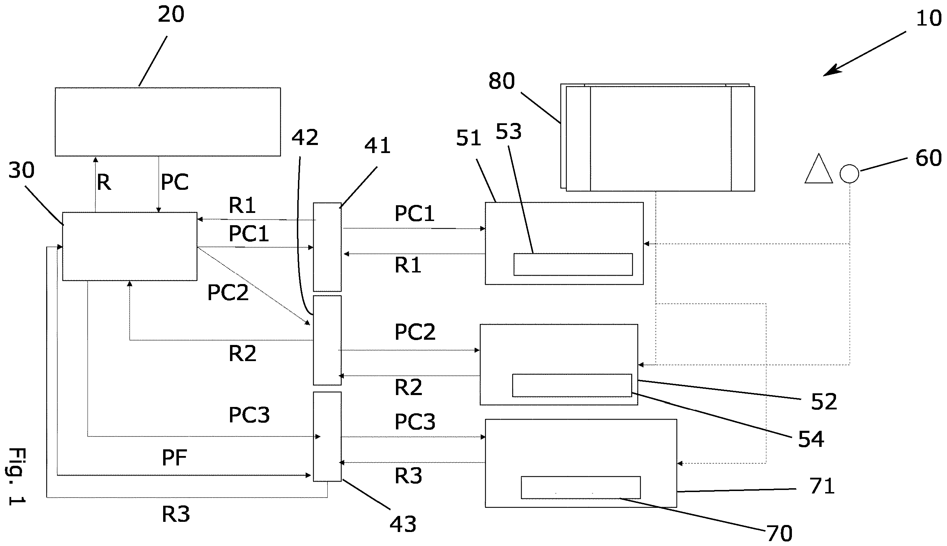

The system 10 shown in Fig. 1 relates to a system 10 for applying machine learning to a real application, in particular a real robot application 71, for a machine, in particular a robot. The system 10 comprises a learner 20, a trainer 30, a first manager 41, a second manager 42, a third manager 43, a first simulated application 51, a second simulated application 52, a simulation model 60, a real robot application 71 and one or more robot programs 80.

The first simulated application 51 runs on a first virtual machine or computer device and the second simulated application 52 runs on a second virtual machine or computer device. The first simulated application 51 and the second simulated application 52 can also run on the same virtual machine and/or the same computer device. The first simulated application 51 runs on a first simulation 53 and the second simulated application 52 runs on a second simulation 54. The first simulation 53 and the second simulation 54 are based on a simulation model 60, which provides a platform for executing the robot program 80 in the first simulated application 51 and the second simulated application 52.

The real robot application 71 runs on a robot 70. The robot 70 is a real physical machine. The simulation model 60 is a digital reflection of the robot 70. In the ideal case, the robot program 80 executed on the first simulation 53 or the second simulation 54 lead to the same results as the robot program 80 executed on the robot 70. However, almost always, there is a difference between the simulation and the physical machine.

In this example, the robot program 80 can be expressed by the following pseudo code:

```
 float r // search radius
 float I // search increment
 int p // search pattern
 Pick (Pos_0)
 Move (Pos_1)
 Insert_object (r, i, p)
```

The robot program 80 contains instructions for picking up an object 90 at position Pos_0, moving it to a position Pos_1 and inserting it into a pocket 91 or a similar in the proximity Pos_1. In this example, the insertion method has three parameters. A first parameter r is a radius around Pos_1, in which the robot will search for the pocket, wherein the radius is a search radius of the robot 70. A second parameter p is a search pattern. Parameter p for example determines if the search pattern is radial with rotation or radial without rotation. A third parameter i is the increment, which defines the granularity of the search.

In order to apply machine learning to the first simulated application 51, the second simulated application 52 and the real robot application 71, the leaner 20 is configured to generate an initial set of candidate parameters PC. Additionally, the learner 20 is configured to generate new sets of candidate parameters PC. The sets of candidate parameters PC, comprise the first parameter r, the second parameter p and the second parameter i.

The leaner 20 is connected to the trainer 30, which itself is connected to the first manager 41, the second manager 42 and the third manager 43. Although it is possible to only have a single manager, in this example one manager 41, 42, 43 is associated with one application 51, 52, 71, respectively. The first manager 41 is associated with the first simulated application 51, the second manager 42 is associated with the second simulated application 52 and the third manager is associated with the real robot application 71.

Generally spoken, the learner 20 provides the trainer 30 with a plurality of sets of candidate parameters PC. The trainer 30 provides a first set of candidate parameters PC1 to the first the first simulated application 51, a second set of candidate parameters PC2 to the second simulated application 52 and a third set of candidate parameters PC3 to the real robot application 71. The first simulated application 51 provides a first interim result R1, the second simulated application 52 dprovides a second interim result R2 and the real robot application 71 provides a third interim result R3 via the respective first manager 41, second manager 42 and third manager 43 to the trainer 30. The trainer 30 then provides the learner 20 with results R, on which bases new sets of candidate parameters PC are generated, until the machine learning is completed and a set of final parameters PF is found, which then is provided to the real robot application 71.

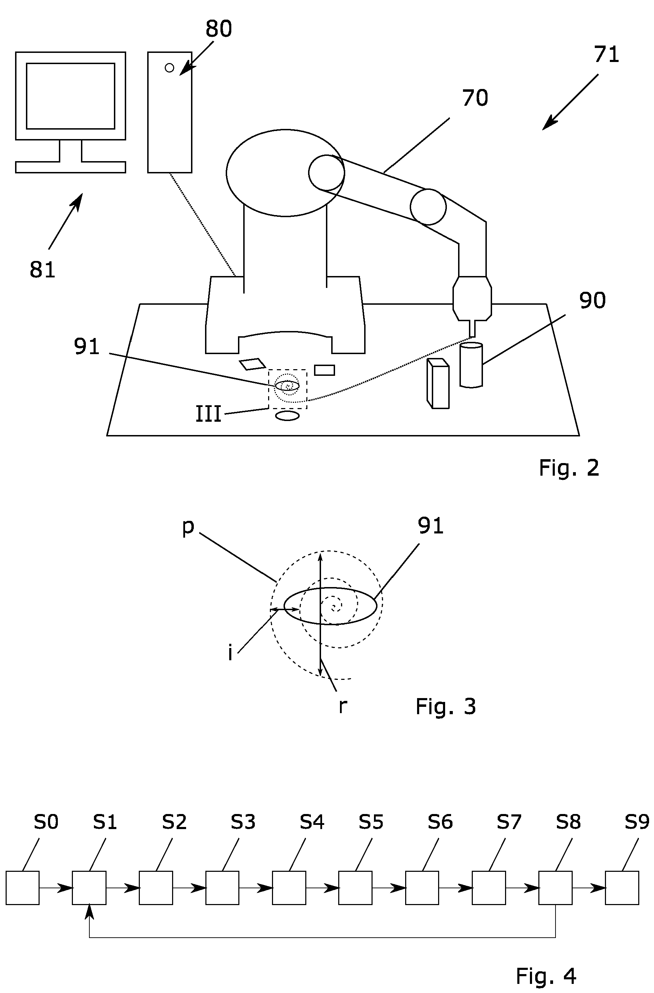

Fig. 2 shows a real robot application 71. A robot 70 is controlled by a computer device 81. On the computer device 81, the program 80 is executed. The robot program 80 is for example provided with the third set of candidate parameters PC3, including the first parameter r, the second parameter p and the third parameter i. As illustrated in Fig. 3, the first parameter r determines the radius of a region for a search motion of the robot 70. The second parameter p setting the search pattern is in this case set to a spiral search pattern. The third parameter i determines an increment for the search motion, in this case the spiral search motion.

The program simulates uncertainty with 100 random start positions for each set of candidate parameters.

As a learning algorithm any kind of meta-heuristic for optimization like genetic algorithms, tabu-search or simulated annealing can be used to optimize the parameters.

In this example, the parameters are initialized with rough ranges of the first parameter r being in a range of 3.0 mm and 20.0 mm and the third parameter i being in a range of 0.1 mm and 5.0 mm. In this example, the second parameter p is at a stable value of spiral pattern.

Since the robot program 80 itself never changes, the real robot application 70 functions as a black box. Different sets of candidate parameters are provided for the real robot application 71, and therefore into the black box, and the real robot application 71 returns the third interim result R3, in this case the time required to finish the search.

The method for applying machine learning to an application is illustrated in Fig. 4, wherein in the exemplary embodiment the real application is a real robot application 71 and the machine executing the real robot application 71 is a robot 70.

In step 0, the learner 20, configured as a machine learning backend, creates an initial set of candidate parameters PC for the first parameter r, the second parameter p and the third parameter i. This can be done entirely randomly or based on previous learning in similar applications.

In step 1, the trainer 30 receives the set of candidate parameters PC from the learner 20.

In step 2, the set of candidate parameters PC are sent to the managers, in this case the first manager 41, the second manager 42 and the third manager 43. The learner 20 can send the same set of candidate parameters PC to every manager 41, 42, 43, however, the leaner 20 can send a first set of candidate parameters PC1 to the first manager 41, a second set of candidate parameters PC2 to the second manager 42 and a third set of candidate parameters PC3 to the third manager 43.

In step 3, each manager 41, 42, 43 sets the received set of candidate parameters PC1, PC2, PC3 of the robot program 80 into the respective simulation application 51, 52 and the real robot application 71.

In step 4, the first simulator 53 runs the first simulated application 51 based on the first set of candidate parameters PC1. The second simulator 54 runs the second simulated application 52 based on the second set of candidate parameters PC2. The robot 70 runs the real robot application 71 based on the third set of candidate parameters PC3, in particular by the computer device 81 running the robot program 80 with the third set of candidate parameters PC3.

In step 5, the respective managers 41, 42, 43, receive the respective interim results R1, R2, R3 and measure the performance of the execution of the robot program 80. This involves possibly restarting or resetting one of the first simulation 53 and/or the second simulation 54 and/or the robot 70 in case the experiment failed because the used set of candidate parameters PC1, PC2, PC3 was an infeasible solution.

In step 6, the respective managers 41, 42, 43 provide the respective interim results R1, R2, R3 and measured performance information to the trainer 30.

In step 7, the trainer 30 collects a sufficient number of examples and provides an end result R, in particular a combination of tested sets of candidate parameters PC and measured performance information, to the learner 20. Alternatively, a database might be used to store the results R and the learner 20 reads from there.

In step 8, the leaner generates new sets of candidate parameters PC for evaluation.

After step 8, the process continues repeatedly from step 1 until a stop criterion, like a number of tested configurations or a convergence in a stable solution, is met. After meeting this stop criterion, the best learned solution is set as final solution in the robot program 80 by providing the robot program 80 with a set of final parameters PF in step 9.

After this step 9, the learning infrastructure is not required for robot operation anymore.

### List of reference signs

- 10: system
- 20: learner
- 30: trainer
- 41: first manager
- 42: second manager
- 43: third manager
- 51: first simulated application
- 52: second simulated application
- 53: first simulation
- 54: second simulation
- 60: simulation model
- 70: robot
- 71: real application (real robot application)
- 80: program (robot program)
- 81: computer device
- 90: object
- 91: pocket
- PC: set of candidate parameters
- PC1: first set of candidate parameters
- PC2: second set of candidate parameters
- PC3: third set of candidate parameters
- R: end result
- R1: first interim result
- R2: second interim result
- R3: third interim result
- PF: final parameter

## Claims

1. A method for applying machine learning to an application, comprising the steps:
a) Generating a set of candidate parameters (PC) by a learner (20);
b) Executing a program (80) in at least one simulated application (51, 52) and in at least one real application (71) executed on a machine (70) based on the set of candidate parameters (PC) and providing interim results (R1, R2) of tested sets of candidate parameters (PC1, PC2) based on a measured performance information of the execution of the program (80);
c) Collecting a predetermined number of interim results (R1, R2) and providing an end result (R) based on a combination of the candidate parameters (PC) and the measured performances information by a trainer (30);
d) Generating a new set of candidate parameters (PC) by the learner (20) based on the end result (R), for being executed by the unchanged program (80); and
e) modifying the simulated application (51, 52) based on a reality data of the machine (70), wherein the reality data is acquired while executing the program (80) in the real application (71), wherein the reality data is acquired using measurements from the real world and further estimations, wherein the measurements comprise physics parameters.

2. The method of claim 1, wherein
the real application (71) is a real robot application and the machine (70) is a robot;
wherein preferably, the program (80) is executed simultaneously in a plurality of simulated applications (51, 52) and in at least one real application (71).

3. The method of any of the preceding claims, wherein
the program (80) is executed in cooperating real applications (71),
wherein preferably the set of candidate parameters (PC) defines task assignments to each of the cooperating real applications (71).

4. The method of any of the preceding claims, wherein
steps a) to d) are repeated, without changing the program (80), until a stop criterion is met,
wherein preferably the stop criterion comprises an amount of executions of the program (80) and/or a target measured performance.

5. The method of any of the preceding claims, wherein
the set of candidate parameters (PC) has a parameter range;
wherein the set of candidate parameters (PC1, PC2) executed on the simulated application (51, 52) has a wider parameter range than the set of candidate parameters (PC3) executed on the real application (71).

6. The method of any of the preceding claims, comprising the steps:
assigning the set of candidate parameters (PC) to the simulated application (51, 52) and/or the real application (71) by at least one manager (41, 42, 43); and
preferably receiving the interim results (R1, R2, R3) of tested sets of candidate parameters (PC) based on a measured performance of the execution of the program (80) by the manager (41, 42, 43).

7. The method of any of the preceding claims, comprising the steps:
receiving the interim results (R1, R2, R3) by a trainer (30);
wherein the trainer (30) triggers the generation of new candidate parameters (PC) by the learner (20).

8. A system (10) for applying machine learning to an application, comprising:
a learner (20), configured to generate a set of candidate parameters (PC);
at least one simulated application (51, 52); at least one real application (71);
a program (80), configured to be executed in the simulated application (51, 52) and in the real application (71) based on the set of candidate parameters (PC), wherein the program (80) is configured to provide interim results (R1, R2) of tested sets of candidate parameters (PC1, PC2) based on a measured performance information of the execution of the program (80);
a trainer (30), configured to collect a predetermined number of interim results (R1, R2), wherein the trainer (30) is configured to provide an end result (R) based on a combination of the candidate parameters (PC) and the measured performance information;
a sensor, configured to acquire reality data while the program (80) is executed in a real application (71), wherein the reality data is acquired using measurements from the real world and further estimations, wherein the measurements comprise physics parameters;
wherein the simulated application (51, 52) is configured to be modified based on the reality data; and
wherein the learner (20) is configured to generate a new set of candidate parameters (PC) based on the end result (R), for being executed by the unchanged program (80).

9. The system of claim 8, further **characterized in that** the program (80) is configured to be executed simultaneously in a plurality of simulated applications (51, 52) and in at least one real application (71).

10. The system of any of claims 8 to 9, wherein
the set of candidate parameters (PC) has a parameter range; wherein
the set of candidate parameters (PC1, PC2) executed on the simulated application (51, 52) has a wider parameter range than the set of candidate parameters (PC3) executed on the real application (71).

11. The system of any of claims 8 to 10, comprising:
a manager (41, 42, 43), configured to assign the set of candidate parameters (PC1, PC2, PC3) to the simulated application (51, 52) and/or the real application (71); and
preferably configured to receive the interim results (R1, R2, R3) of tested sets of candidate parameters (PC1, PC2, PC3) based on a measured performance of the execution of the program (80), wherein further preferably the learner (20) is configured to receive the interim results (R1, R2, R3) by a trainer (30) and the trainer (30) is configured to trigger the generation of new candidate parameters (PC) by the learner (20).

12. A computer program that when it is executed on a system (10) for applying machine learning to an application instructs the system (10) to execute the following steps:
a) Generating a set of candidate parameters (PC) by a learner (20);
b) Executing a program (80) in at least one simulated application (51, 52) and in at least one real application (71) based on the set of candidate parameters (PC) and providing interim results (R1, R2, R3) of tested sets of candidate parameters (PC1, PC2, PC3) based on a measured performance information of the execution of the program (80);
c) Collecting a predetermined number of interim results (R1, R2, R3) and providing an end result (R) based on a combination of the candidate parameters (PC) and the measured performance information by a trainer (30); and
d) Generating a new set of candidate parameters (PC) by the learner (20) based on the end result (R), for being executed by the unchanged program (80); and
e) modifying the simulated application (51, 52) based on a reality data of the machine (70), wherein the reality data is acquired while executing the program (80) in the real application (71), wherein the reality data is acquired using measurements from the real world and further estimations, wherein the measurements comprise physics parameters.

## Patentansprüche

1. Verfahren zur Anwendung maschinellen Lernens auf eine Applikation, aufweisend die folgenden Schritte:
a) Generierung eines Satzes von Kandidatenparametern (PC) durch einen Lernenden (20);
b) Ausführen eines Programms (80) in mindestens einer simulierten Applikation (51, 52) und in mindestens einer realen Applikation (71), das auf einer Maschine (70) ausgeführt wird, basierend auf dem Satz von Kandidatenparametern (PC) und Bereitstellen von Zwischenergebnissen (R1, R2) von getesteten Sätzen von Kandidatenparametern (PC1, PC2) basierend auf einer gemessenen Leistungsinformation der Ausführung des Programms (80);
c) Sammeln einer vorbestimmten Anzahl von Zwischenergebnissen (R1, R2) und Bereitstellen eines Endergebnisses (R) basierend auf einer Kombination aus den Kandidatenparametern (PC) und den gemessenen Leistungsinformationen durch einen Trainer (30);
d) Erzeugen eines neuen Satzes von Kandidatenparametern (PC) durch den Lernenden (20) basierend auf dem Endergebnis (R), um vom unveränderten Programm (80) ausgeführt zu werden; und
e) Modifizieren der simulierten Applikation (51, 52) basierend auf Realitätsdaten der Maschine (70), wobei die Realitätsdaten während der Ausführung des Programms (80) in der realen Applikation (71) erfasst werden, wobei die Realitätsdaten durch Messungen aus der realen Welt und weiteren Schätzungen erfasst werden, wobei die Messungen physikalische Parameter aufweisen.

2. Verfahren nach Anspruch 1, wobei die reale Applikation (71) eine reale Roboterapplikation ist und die Maschine (70) ein Roboter ist;
wobei vorzugsweise das Programm (80) gleichzeitig in einer Vielzahl von simulierten Applikationen (51, 52) und in mindestens einer realen Applikation (71) ausgeführt wird.

3. Das Verfahren nach einem der vorhergehenden Ansprüche, wobei
das Programm (80) in kooperierenden realen Applikationen (71) ausgeführt wird, wobei vorzugsweise der Satz von Kandidatenparametern (PC) Aufgabenzuweisungen an jede der kooperierenden realen Applikationen (71) definiert.

4. Verfahren nach einem der vorhergehenden Ansprüche, wobei
die Schritte a) bis d) werden wiederholt, ohne dass das Programm (80) geändert wird, bis ein Stoppkriterium erfüllt ist,
wobei das Stoppkriterium vorzugsweise eine Anzahl von Ausführungen des Programms (80) und/oder eine gemessene Zielleistung aufweist.

5. Verfahren nach einem der vorhergehenden Ansprüche, wobei
der Satz der Kandidatenparameter (PC) hat einen Parameterbereich;
wobei der Satz von Kandidatenparametern (PC1, PC2), der auf der simulierten Applikation (51, 52) ausgeführt wird, einen größeren Parameterbereich aufweist als der Satz von Kandidatenparametern (PC3), der auf der realen Applikation (71) ausgeführt wird.

6. Verfahren nach einem der vorhergehenden Ansprüche, aufweisend die folgenden Schritte:
Zuordnen des Satzes von Kandidatenparametern (PC) zu der simulierten Applikation (51, 52) und/oder der realen Applikation (71) durch mindestens einen Manager (41, 42, 43); und
vorzugsweise Empfangen der Zwischenergebnisse (R1, R2, R3) der getesteten Sätze von Kandidatenparametern (PC) basierend auf einer gemessenen Leistung der Ausführung des Programms (80) durch den Manager (41, 42, 43).

7. Verfahren nach einem der vorhergehenden Ansprüche, aufweisend die folgenden Schritte:
Empfang der Zwischenergebnisse (R1, R2, R3) durch einen Trainer (30);
wobei der Trainer (30) die Erzeugung neuer Kandidatenparameter (PC) durch den Lernenden (20) auslöst.

8. System (10) zur Anwendung von maschinellem Lernen auf eine Applikation, aufweisend:
einen Lernenden (20), der so konfiguriert ist, dass er einen Satz von Kandidatenparametern (PC) erzeugt;
mindestens eine simulierte Applikation (51, 52);
mindestens eine reale Applikation (71);
ein Programm (80), das derart eingerichtet ist, dass es in der simulierten Applikation (51, 52) und in der realen Applikation (71) basierend auf dem Satz von Kandidatenparametern (PC) ausgeführt wird, wobei das Programm (80) eingerichtet ist, dass es Zwischenergebnisse (R1, R2) von getesteten Sätzen von Kandidatenparametern (PC1, PC2) basierend auf einer gemessenen Leistungsinformation der Ausführung des Programms (80) bereitstellt;
einen Trainer (30), der derart eingerichtet ist, dass er eine vorbestimmte Anzahl von Zwischenergebnissen (R1, R2) sammelt, wobei der Trainer (30) derart eingerichtet ist, dass er ein Endergebnis (R) basierend auf einer Kombination aus den Kandidatenparametern (PC) und den gemessenen Leistungsinformationen liefert;
einen Sensor, der derart eingerichtet ist, dass er Realitätsdaten erfasst, während das Programm (80) in einer realen Applikation (71) ausgeführt wird, wobei die Realitätsdaten unter Verwendung von Messungen aus der realen Welt und weiteren Schätzungen erfasst werden, wobei die Messungen physikalische Parameter aufweisen;
wobei die simulierte Applikation (51, 52) derart eingerichtet ist, dass sie basierend auf den Realitätsdaten modifiziert wird; und
wobei der Lernende (20) derart eingerichtet ist, dass er einen neuen Satz von Kandidatenparametern (PC) basierend auf dem Endergebnis (R) erzeugt, um von dem unveränderten Programm (80) ausgeführt zu werden.

9. System nach Anspruch 8, ferner **dadurch gekennzeichnet, dass**
das Programm (80) ist derart eingerichtet, dass es gleichzeitig in einer Vielzahl von simulierten Applikationen (51, 52) und in mindestens einer realen Applikation (71) ausgeführt wird.

10. System nach einem der Ansprüche 8 bis 9, wobei der Satz von Kandidatenparametern (PC) einen Parameterbereich aufweist; wobei der Satz von Kandidatenparametern (PC1, PC2), der in der simulierten Applikation (51, 52) ausgeführt wird, einen größeren Parameterbereich aufweist als der Satz von Kandidatenparametern (PC3), der in der realen Applikation (71) ausgeführt wird.

11. System nach einem der Ansprüche 8 bis 10, aufweisend:
einen Manager (41, 42, 43), der derart eingerichtet ist, dass er den Satz von Kandidatenparametern (PC1, PC2, PC3) der simulierten Applikation (51, 52) und/oder der realen Applikation (71) zuweist; und
vorzugsweise derart eingerichtet ist, dass er die Zwischenergebnisse (R1, R2, R3) von getesteten Sätzen von Kandidatenparametern (PC1, PC2, PC3) basierend auf einer gemessenen Leistung der Ausführung des Programms (80) empfängt, wobei weiter vorzugsweise der Lernende (20) derart eingerichtet ist, dass er die Zwischenergebnisse (R1, R2, R3) durch einen Trainer (30) empfängt, und der Trainer (30) derart eingerichtet ist, dass er die Erzeugung neuer Kandidatenparameter (PC) durch den Lernenden (20) auslöst.

12. Computerprogramm, das, wenn es auf einem System (10) zur Anwendung maschinellen Lernens auf eine Applikation ausgeführt wird, das System (10) anweist, die folgenden Schritte auszuführen:
a) Generierung eines Satzes von Kandidatenparametern (PC) durch einen Lernenden (20);
b) Ausführen eines Programms (80) in mindestens einer simulierten Applikation (51, 52) und in mindestens einer realen Applikation (71), das auf einer Maschine (70) ausgeführt wird, basierend auf dem Satz von Kandidatenparametern (PC) und Bereitstellen von Zwischenergebnissen (R1, R2) von getesteten Sätzen von Kandidatenparametern (PC1, PC2) basierend auf einer gemessenen Leistungsinformation der Ausführung des Programms (80);
c) Sammeln einer vorbestimmten Anzahl von Zwischenergebnissen (R1, R2) und Bereitstellen eines Endergebnisses (R) basierend auf einer Kombination aus den Kandidatenparametern (PC) und den gemessenen Leistungsinformationen durch einen Trainer (30);
d) Erzeugen eines neuen Satzes von Kandidatenparametern (PC) durch den Lernenden (20) basierend auf dem Endergebnis (R), um vom unveränderten Programm (80) ausgeführt zu werden; und
e) Modifizieren der simulierten Applikation (51, 52) basierend auf Realitätsdaten der Maschine (70), wobei die Realitätsdaten während der Ausführung des Programms (80) in der realen Applikation (71) erfasst werden, wobei die Realitätsdaten durch Messungen aus der realen Welt und weiteren Schätzungen erfasst werden, wobei die Messungen physikalische Parameter aufweisen.

## Revendications

1. Procédé d'application d'un apprentissage machine à une application, comprenant les étapes suivantes :
a) Génération d'un ensemble de paramètres candidats (PC) par un apprenant (20) ;
b) Exécution d'un programme (80) dans au moins une application simulée (51, 52) et dans au moins une application réelle (71) exécutée sur une machine (70) sur la base de l'ensemble de paramètres candidats (PC) et fourniture de résultats intermédiaires (R1, R2) d'ensembles testés de paramètres candidats (PC1, PC2) sur la base d'informations de performance mesurée relatives à l'exécution du programme (80) ;
c) Collecte d'un nombre prédéterminé de résultats intermédiaires (R1, R2) et fourniture d'un résultat final (R) sur la base d'une combinaison des paramètres candidats (PC) et des informations de performance mesurée par un entraîneur (30) ;
d) Génération d'un nouvel ensemble de paramètres candidats (PC) par l'apprenant (20) sur la base du résultat final (R), en vue de leur exécution par le programme (80) inchangé ; et
e) Modification de l'application simulée (51, 52) sur la base de données de réalité relatives à la machine (70), les données de réalité étant acquises pendant l'exécution du programme (80) dans l'application réelle (71), les données de réalité étant acquises à l'aide de mesures issues du monde réel et d'estimations complémentaires, les mesures comprenant des paramètres physiques.

2. Procédé selon la revendication 1,
l'application réelle (71) étant une application robotique réelle et la machine (70) étant un robot ;
de préférence, le programme (80) étant exécuté simultanément dans une pluralité d'applications simulées (51, 52) et dans au moins une application réelle (71).

3. Procédé selon l'une quelconque des revendications précédentes,
le programme (80) étant exécuté dans des applications réelles coopérantes (71),
de préférence, l'ensemble de paramètres candidats (PC) définissant des affectations de tâches à chacune des applications réelles coopérantes (71).

4. Procédé selon l'une quelconque des revendications précédentes,
les étapes a) à d) étant répétées, sans changement apporté au programme (80), jusqu'à ce qu'un critère d'arrêt soit satisfait,
de préférence, le critère d'arrêt comprenant une quantité d'exécutions du programme (80) et/ou une performance mesurée cible.

5. Procédé selon l'une quelconque des revendications précédentes,
l'ensemble de paramètres candidats (PC) possédant une plage de paramètres ;
l'ensemble de paramètres candidats (PC1, PC2) exécutés sur l'application simulée (51, 52) possédant une plage de paramètres plus large que celle de l'ensemble de paramètres candidats (PC3) exécutés sur l'application réelle (71).

6. Procédé selon l'une quelconque des revendications précédentes, comprenant les étapes suivantes :
affectation de l'ensemble de paramètres candidats (PC) à l'application simulée (51, 52) et/ou à l'application réelle (71) par au moins un gestionnaire (41, 42, 43) ; et
de préférence, réception des résultats intermédiaires (R1, R2, R3) d'ensembles testés de paramètres candidats (PC) sur la base d'une performance mesurée de l'exécution du programme (80) par le gestionnaire (41, 42, 43).

7. Procédé selon l'une quelconque des revendications précédentes, comprenant les étapes suivantes :
réception des résultats intermédiaires (R1, R2, R3) par un entraîneur (30) ;
l'entraîneur (30) déclenchant la génération de nouveaux paramètres candidats (PC) par l'apprenant (20).

8. Système (10) d'application d'un apprentissage machine à une application, comprenant :
un apprenant (20), configuré pour générer un ensemble de paramètres candidats (PC) ;
au moins une application simulée (51, 52) ;
au moins une application réelle (71) ;
un programme (80), configuré pour être exécuté dans l'application simulée (51, 52) et dans l'application réelle (71) sur la base de l'ensemble de paramètres candidats (PC), le programme (80) étant configuré pour fournir des résultats intermédiaires (R1, R2) d'ensembles testés de paramètres candidats (PC1, PC2) sur la base d'informations de performance mesurée relatives à l'exécution du programme (80) ;
un entraîneur (30), configuré pour collecter un nombre prédéterminé de résultats intermédiaires (R1, R2), l'entraîneur (30) étant configuré pour fournir un résultat final (R) sur la base d'une combinaison des paramètres candidats (PC) et des informations de performance mesurée ;
un capteur, configuré pour acquérir des données de réalité pendant l'exécution du programme (80) dans une application réelle (71), les données de réalité étant acquises à l'aide de mesures issues du monde réel et d'estimations complémentaires, les mesures comprenant des paramètres physiques ;
l'application simulée (51, 52) étant configurée pour être modifiée sur la base des données de réalité ; et
l'apprenant (20) étant configuré pour générer un nouvel ensemble de paramètres candidats (PC) sur la base du résultat final (R), en vue de leur exécution par le programme (80) inchangé.

9. Système selon la revendication 8, **caractérisé en outre en ce que** le programme (80) est configuré pour être exécuté simultanément dans une pluralité d'applications simulées (51, 52) et dans au moins une application réelle (71).

10. Système selon l'une quelconque des revendications 8 à 9,
l'ensemble de paramètres candidats (PC) possédant une plage de paramètres ;
l'ensemble de paramètres candidats (PC1, PC2) exécutés sur l'application simulée (51, 52) possédant une plage de paramètres plus large que celle de l'ensemble de paramètres candidats (PC3) exécutés sur l'application réelle (71).

11. Système selon l'une quelconque des revendications 8 à 10, comprenant :
un gestionnaire (41, 42, 43), configuré pour affecter l'ensemble de paramètres candidats (PC1, PC2, PC3) à l'application simulée (51, 52) et/ou à l'application réelle (71) ; et
de préférence configuré pour recevoir les résultats intermédiaires (R1, R2, R3) d'ensembles testés de paramètres candidats (PC1, PC2, PC3) sur la base d'une performance mesurée de l'exécution du programme (80), de préférence en outre l'apprenant (20) étant configuré pour recevoir les résultats intermédiaires (R1, R2, R3) par un entraîneur (30) et l'entraîneur (30) étant configuré pour déclencher la génération de nouveaux paramètres candidats (PC) par l'apprenant (20)

12. Programme d'ordinateur qui, lorsqu'il est exécuté sur un système (10) d'application d'un apprentissage machine à une application, donne instruction au système (10) d'exécuter les étapes suivantes :
a) Génération d'un ensemble de paramètres candidats (PC) par un apprenant (20) ;
b) Exécution d'un programme (80) dans au moins une application simulée (51, 52) et dans au moins une application réelle (71) sur la base de l'ensemble de paramètres candidats (PC) et fourniture de résultats intermédiaires (R1, R2, R3) d'ensembles testés de paramètres candidats (PC1, PC2, PC3) sur la base d'informations de performance mesurée relatives à l'exécution du programme (80) ;
c) Collecte d'un nombre prédéterminé de résultats intermédiaires (R1, R2, R3) et fourniture d'un résultat final (R) sur la base d'une combinaison des paramètres candidats (PC) et des informations de performance mesurée par un entraîneur (30) ; et
d) Génération d'un nouvel ensemble de paramètres candidats (PC) par l'apprenant (20) sur la base du résultat final (R), en vue de leur exécution par le programme (80) inchangé ; et
e) Modification de l'application simulée (51, 52) sur la base de données de réalité relatives à la machine (70), les données de réalité étant acquises pendant l'exécution du programme (80) dans l'application réelle (71), les données de réalité étant acquises à l'aide de mesures issues du monde réel et d'estimations complémentaires, les mesures comprenant des paramètres physiques.
